# EUROPEAN PATENT SPECIFICATION

(11) **EP 0 216 442 B1**
(45) Date of publication and mention of the grant of the patent: **08.09.1993**
(21) Application number: 86304345.1
(22) Date of filing: 06.06.1986
(51) Int. Cl.: G11B 23/03, G11B 25/04, G11B 17/04, G11B 19/20

(54) **Disk drive apparatus**
Plattenantriebsgerät
Appareil d'entraînement de disque

(30) Priority: 19.09.1985 US 777814
(43) Date of publication of application: 01.04.1987
(73) Proprietor: Philips Electronics N.V., 5621 BA Eindhoven (NL)
(72) Inventor: Davis, Marvin Benjamin, Colorado Springs Colorado (US)
(74) Representative: Van Weele, Paul Johannes Frits

(56) References cited:
- EP-A- 0 144 068
- DE-A- 3 433 344
- FR-A- 2 508 220
- GB-A- 2 082 371
- GB-A- 2 152 267
- GB-A- 2 155 233
- US-A- 4 399 480
- US-A- 4 482 993
- US-A- 4 527 264

## Description

This invention relates to a system for recording/reading data on/from a disk media and comprising a disk cartridge having a disk housing enclosing the disk media and having a door on a cartridge housing moveable between one single open position wherein both surfaces of said disk are exposed for cooperation with a sensor in a disk drive apparatus to enable recording and/or reading of data recorded on said disk media and a closed position wherein said disk surface is enclosed in said cartridge housing and not exposed, and bias means carried by said cartridge housing biasing said door to its closed position, wherein said cartridge housing has an access opening in each of said opposite sides permitting access to opposite sides of said disk, door opening means being provided in the disk drive apparatus for engaging said door to move it from its closed to its open position when said disk cartridge is inserted in said receiving means, said door opening means comprising an arm pivotly mounted to said housing and an actuator engaging said door when said disk cartridge is inserted into said receiving means, said arm and actuator opening said door as said disk cartridge is inserted into said receiving means.

Disk cartridges are well known in the computer art. Basically, a disk cartridge comprises a cartridge housing containing a disk upon which data may be recorded. A door or slide is ordinarily provided in the cartridge housing, the door or slide, when opened, permitting access of read and write mechanisms of disk drive apparatus to the disk to permit the recording or retrieving of data. The disk drive apparatus ordinarily includes a mechanism for opening the door or slide on the disk cartridge, and for engaging the disk within the disk cartridge, and for engaging the disk within the disk cartridge to a spindle of a motor or other drive mechanism. The disk, when rotated by the drive mechanism, permits access of the disk to the read and write mechanisms.

In computer applications it is desirable to provide disk drive apparatus that is as compact and miniature as possible. However, physical constraints often limit the degree of compactness available. Heretofore, cartridge disk drive apparatus have employed the principle of inserting the disk cartridge into the disk drive apparatus and moving the cartridge into engagement with a drive motor. For a cartridge approximately 15 cm (6 inches) square and 0.64 cm (0.25 inch) thick (56 cm³ (9 in³)), 225 cm³ (36 in³) of space is required if the disk cartridge is to be moved 1.9 cm (0.75 inch). Thus, 175 cm³ (27 in³) are required within the disk drive apparatus merely to permit movement of the disk cartridge.

A system of this kind is known from GB-A 2 155 233. The known system comprises a so called 3½" magnetic floppy disc. The door has openings on either side of the cartridge and the drive apparatus is provided with dual pick-up means in the form of magnetic heads which cooperate with both sides of the disk. The cartridge and the drive apparatus are provided with cooperating features that will allow the insertion of the cartridge in one orientation only.

The above system needs two pick-up means on either side of an inserted cartridge two cooperate with the two sides of the disc, which will have its influence on the volume of the drive apparatus.

It is an object of the invention to provide a system of the kind described in the introduction which comprises a drive apparatus of a small volume yet is capable of storage of a high amount of data.

The invention is characterized in that the cartridge is of the physically reversible type and said door includes a receiver laterally offset from the horizontal centre plane of said disk cartridge as to be orientated either in an upper or lower position with respect to said centre plane, dependent on the orientation of said cartridge, said door opening means comprising first and second arms pivotably mounted in the housing, a first actuator mounted to said first arm to engage said receiver when said disk cartridge is in a first orientation such that said receiver is above the horizontal centre of the disk cartridge, and a second actuator mounted to said second arm to engage said receiver when said disk cartridge is in a second orientation opposite said first orientation such that said receiver is below the horizontal centre of the disk cartridge, whereby upon insertion of a disk cartridge into said disk drive apparatus, one or the other of said first and second actuators engages said receiver so that continued insertion movement of the disk cartridge forces pivotal movement of the arm whose actuator engages said receiver causing the door to move from its closed to its open position against the bias of the said bias means.

In the system of the invention, both sides of the disc can be used by physically reversing the cartridge. The door will open in the correct direction in either of the two correct orientations of the cartridge. Only one pick-up means is needed, which will contribute to a small volume of the drive apparatus.

In order to guarantee correct operation of the system, more particularly to prevent interference of the actuators with each other and the cartridge an embodiment of the invention is of interest which is characterized in that the receiver comprises a recess in said door extending over a part of the distance of the thickness dimension of the cartridge, the actuators on the first and second arms each engaging said door over less than said distance, so that continued insertion movement of the disc cartridge forces pivotal movement of both arms, the actuator which is out of engagement with the receiver sliding over the surface of the door against the bias of said bias means.

The invention also relates to a disk cartridge for a system for recording/reading data on/from a disk media and having a disk housing enclosing the disk media and having a door on a cartridge housing moveable between one single open position wherein both surfaces of said disk are exposed for cooperation with a sensor in a disk drive apparatus to enable recording and/or reading of data recorded on said disk media and a closed position wherein said disk surface is enclosed in said cartridge housing and not exposed, and bias means carried by said cartridge housing biasing said door to its closed position, wherein said cartridge housing has an access opening in each of said opposite sides permitting access to opposite sides of said disk, wherein the cartridge is of the physically reversible type and said door includes a receiver laterally offset from the horizontal centre plane of said disk cartridge as to be orientated either in an upper or lower position with respect to said centre plane, dependent on the orientation of said cartridge.

The invention furthermore relates to a disc drive apparatus for a system for recording/reading data on/from a disk media, the system comprising a disk cartridge having a disk housing enclosing the disk media and having a door on a cartridge housing moveable between one single open position wherein both surfaces of said disk are exposed for cooperation with a sensor in a disk drive apparatus to enable recording and/or reading of data recorded on said disk media and a closed position wherein said disk surface is enclosed in said cartridge housing and not exposed, and bias means carried by said cartridge housing biasing said door to its closed position, wherein said cartridge housing has an access opening in each of said opposite sides permitting access to opposite sides of said disk, door opening means being provided in the disk drive apparatus for engaging said door to move it from its closed to its open position when said disk cartridge is inserted in said receiving means, said door opening means comprising an arm pivotably mounted to said housing and an actuator engaging said door when said disk cartridge is inserted into said receiving means, said arm and actuator opening said door as said disk cartridge is inserted into said receiving means, wherein the cartridge is of the physically reversible type and said door includes a receiver laterally offset from the horizontal centre plane of said disk cartridge as to be orientated either in an upper or lower position with respect to said centre plane, dependent on the orientation of said cartridge, said door opening means comprising first and second arms pivotably mounted in the housing, a first actuator mounted to said first arm to engage said receiver when said disk cartridge is in a first orientation such that said receiver is above the horizontal centre of the disk cartridge, and a second actuator mounted to said second arm to engage said receiver when said disk cartridge is in a second orientation opposite said first orientation such that said receiver is below the horizontal centre of the disk cartridge, whereby upon insertion of a disk cartridge into said disk drive apparatus, one or the other of said first and second actuators engages said receiver so that continued insertion movement of the disk cartridge forces pivotal movement of the arm whose actuator engages said receiver causing the door to move from its closed to its open position against the bias of the said bias means.

An interesting embodiment of a disk drive apparatus according to the invention is characterized in that said arms are movable in two different, parallel planes.

The invention is illustrated, merely by way of example, in the accompanying drawings, in which:
Figure 1 is a perspective view, partly in cut-away cross-section, of one embodiment of a disk drive apparatus according to the present invention, a portion of a disk cartridge being illustrated for purposes of orientation;
Figures 2 and 3 are end views of the disk cartridge, illustrating the engagement of a cartridge door opening mechanism of the disk drive apparatus in Figure 1;
Figures 4, 5 and 6 are top views of the disk drive apparatus shown in Figure 1, illustrating the disk cartridge in several steps of insertion; and
Figure 7 is a sectional view taken along the line 7-7 in Figure 4, illustrating a mechanism for raising and lowering a drive mechanism.

Throughout the drawings like parts have been designated by the same reference numerals.

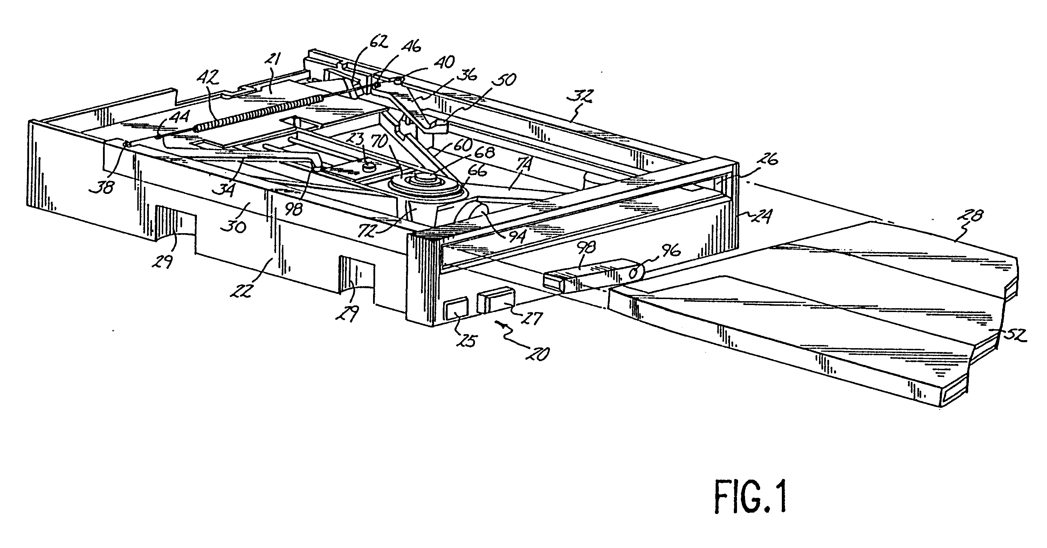

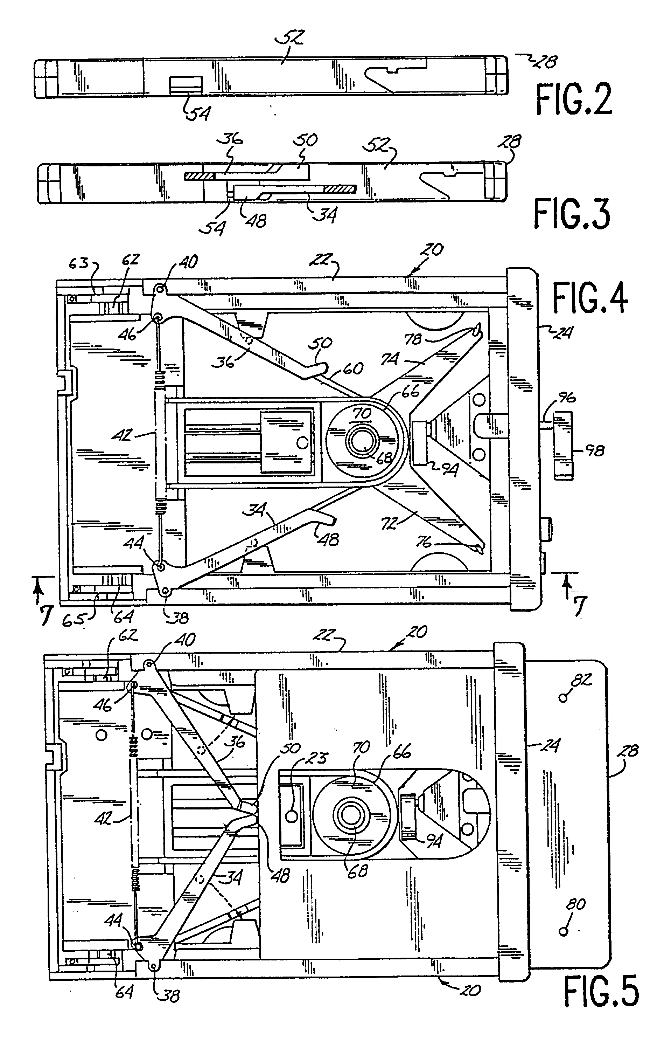

Referring to the drawings, and in particular to Figure 1, there is illustrated a disk drive apparatus 20 according to the present invention. The disk drive apparatus 20 includes a frame 22 having a ace or front plate 24. An opening slot receptacle 26 is provided in the front plate 24 to receive a disk cartridge, illustrated generally at 28. Extrusions 30, 32 form guides within the disk drive apparatus to receive the edges of the disk cartridge 28 and to guide the disk cartridge into the disk drive apparatus. Arms 34, 36 are pivotably mounted by pins 38, 40 to the frame 22, and are biased by a tension spring 42 to the poisition illustrated in Figures 1 and 4. The spring 42 is fastened, at each end, to pins 44, 46 on the arms 34, 36. Actuators 48, 50 on the arms 34, 36 respectively are arranged to engage a door of the disk cartridge 28, as will be hereinafter explained.

Typically, the frame 22 will be enclosed within a cover (not shown) to protect electronic circuitry, shown generally at 21, and read/write heads shown generally at 23. Push buttons and indicators 25, 27 may be provided in the front plate 24 to provide controls for the electronic circuitry and read/write heads and to indicate their operation. Suitable feet or resilient mounting pads (not shown) may be mounted to receptacles 29.

As shown particularly in Figure 2, the disk cartridge 28 includes a slide door 52 which may be slid (to the left in Figure 2) to expose an opening in the top and bottom of the cartridge (not shown) to permit access to rotatable disk media (not shown) within a housing of the disk cartridge. A slot 54 in the slide door 52 is arranged to be engaged by one or the other of the actuators 48, 50 to slide the door from its closed position to its open posiiton, respectively. The slot 54 is laterally offset from the horizontal centre of the housing of the disk cartridge so that it will be above or below the horizontal centre line, depending on the orientation of the housing. A spring (not shown) biases the door towards it closed position.

With particular reference to Figures 1 to 6, as the disk cartridge 28 is inserted in the slot receptable 26 of the disk drive apparatus and guided by extrusions 30, 32 to a position illustrated generally in Figure 6, one or the other of the actuators 48, 50 engages the slot 54 of the disk cartridge. If the disk cartridge is in the orientation illustrated in Figure 2 so that the slot 54 is on the lower portion of the slide door 52, the lower actuator 48 will engage the slot. Continued insertion movement of the disk cartridge will force the arm 34 to pivot, sliding the door to the left (Figure 2) as the cartridge is moved passed the position illustrated in Figure 5 to the position illustrated in Figure 6. The actuator 50 merely slides across the door without hampering the operation. Conversely, if the orientation of the disk cartridge is turned over, as might be desired in reading or writing on the opposite side of the disk media, the slot 54 will be orientated to the upper portion of the slide door and the upper actuator 50 engages the slot 54 to open the slide door. In either case, the disk media is exposed to the read-write heads 23 through the opening exposed by the opened door.

## Claims

1. A system for recording/reading data on/from a disk media and comprising a disk cartridge having a disk housing enclosing the disk media and having a door (52) on a cartridge housing moveable between one single open position wherein both surfaces of said disk are exposed for cooperation with a sensor (23) in a disk drive apparatus to enable recording and/or reading of data recorded on said disk media and a closed position wherein said disk surface is enclosed in said cartridge housing and not exposed, and bias means carried by said cartridge housing biasing said door to its closed position, wherein said cartridge housing has an access opening in each of said opposite sides permitting access to opposite sides of said disk, door opening means (34, 36, 48, 50) being provided in the disk drive apparatus for engaging said door to move it from its closed to its open position when said disk cartridge is inserted in said receiving means, said door opening means comprising an arm (34, 36) pivotably mounted to said housing (22) and an actuator (48, 50) engaging said door (52) when said disk cartridge is inserted into said receiving means, said arm and actuator opening said door as said disk cartridge is inserted into said receiving means, characterized in that
- the cartridge is of the physically reversible type and
- said door includes a receiver (54) laterally offset from the horizontal centre plane of said disk cartridge as to be orientated either in an upper or lower position with respect to said centre plane, dependent on the orientation of said cartridge,
- said door opening means comprising first and second arms (34, 36) pivotably mounted in the housing (22), a first actuator (48) mounted to said first arm (34) to engage said receiver when said disk cartridge is in a first orientation such that said receiver is above the horizontal centre of the disk cartridge, and a second actuator (50) mounted to said second arm (36) to engage said receiver when said disk cartridge is in a second orientation opposite said first orientation such that said receiver is below the horizontal centre of the disk cartridge, whereby upon insertion of a disk cartridge into said disk drive apparatus, one or the other of said first and second actuators (48, 50) engages said receiver (54) so that continued insertion movement of the disk cartridge forces pivotal movement of the arm whose actuator engages said receiver causing the door to move from its closed to its open position against the bias of the said bias means.

2. A system as claimed in claim 1, characterized in that the receiver comprises a recess in said door extending over a part of the distance of the thickness dimension of the cartridge, the actuators on the first and second arms each engaging said door over less than said distance, so that continued insertion movement of the disc cartridge forces pivotal movement of both arms, the actuator which is out of engagement with the receiver sliding over the surface of the door against the bias of said bias means.

3. A disk cartridge for a system for recording/reading data on/from a disk media and having a disk housing enclosing the disk media and having a door (52) on a cartridge housing moveable between one single open position wherein both surfaces of said disk are exposed for cooperation with a sensor (23) in a disk drive apparatus to enable recording and/or reading of data recorded on said disk media and a closed position wherein said disk surface is enclosed in said cartridge housing and not exposed, and bias means carried by said cartridge housing biasing said door to its closed position, wherein said cartridge housing has an access opening in each of said opposite sides permitting access to opposite sides of said disk, wherein said cartridge is characterised by being of the physically reversible type and said door includes a receiver (54) laterally offset from the horizontal centre plane of said disk cartridge as to be orientated either in an upper or lower position with respect to said centre plane, dependent on the orientation of said cartridge.

4. A disc drive apparatus for a system for recording/reading data on/from a disk media, the system comprising a disk cartridge having a disk housing enclosing the disk media and having a door (52) on a cartridge housing moveable between one single open position wherein both surfaces of said disk are exposed for cooperation with a sensor (23) in a disk drive apparatus to enable recording and/or reading of data recorded on said disk media and a closed position wherein said disk surface is enclosed in said cartridge housing and not exposed, and bias means carried by said cartridge housing biasing said door to its closed position, wherein said cartridge housing has an access opening in each of said opposite sides permitting access to opposite sides of said disk, door opening means (34, 36, 48, 50) being provided in the disk drive apparatus for engaging said door to move it from its closed to its open position when said disk cartridge is inserted in said receiving means, said door opening means comprising an arm (34, 36) pivotably mounted to said housing (22) and an actuator (48, 50) engaging said door (52) when said disk cartridge is inserted into said receiving means, said arm and actuator opening said door as said disk cartridge is inserted into said receiving means, wherein the cartridge is of the physically reversible type and said door includes a receiver (54) laterally offset from the horizontal centre plane of said disk cartridge as to be orientated either in a upper or lower position with respect to said centre plane, dependent on the orientation of said cartridge, said door opening means being characterised by comprising first and second arms (34, 36) pivotably mounted in the housing (22), a first actuator (48) mounted to said first arm (34) to engage said receiver when said disk cartridge is in a first orientation such that said receiver is above the horizontal centre of the disk cartridge, and a second actuator (50) mounted to said second arm (36) to engage said receiver when said disk cartridge is in a second orientation opposite said first orientation such that said receiver is below the horizontal centre of the disk cartridge, whereby upon insertion of a disk cartridge into said disk drive apparatus, one or the other of said first and second actuators (48, 50) engages said receiver (54) so that continued insertion movement of the disk cartridge forces pivotal movement of the arm whose actuator engages said receiver causing the door to move from its closed to its open position against the bias of the said bias means.

5. A disk drive apparatus according to claim 4, said arms being movable in two different, parallel planes.

## Patentansprüche

1. System zum Aufzeichnen/Auslesen von Daten auf/von einem Plattenmedium und mit einer Plattenkassette mit einem das Plattenmedium einschließenden Plattengehäuse, und mit einer Tür (52) am Kassettengehäuse, die zwischen einer geöffneten Lage, in der die beiden Oberflächen der genannten Platte zum Zusammenarbeiten mit einem Sensor (23) in einer Plattenantriebsvorrichtung frei sind, damit Aufzeichnung von Daten und/oder Auslese auf der genannten Platte aufgezeichneter Daten möglich ist, und einer geschlossenen Lage beweglich ist, in der die genannte Plattenoberfläche in dem genannten Kassettengehäuse eingeschlossen und nicht zugänglich ist, und wobei an dem genannten Kassettengehäuse Vorspannmittel vorgesehen sind, welche die Tür in der geschlossenen Lage vorgespannt halten, wobei dieses Kassettengehäuse in jeder der einander gegenüberliegenden Seiten eine Durchgangsöffnung aufweist, wodurch die einander gegenüberliegenden Seiten der Platte erreichbar sind, wobei in der Plattenantriebsvorrichtung Türöffnungsmittel (34, 36, 48, 50) vorgesehen sind, zum Zusammenarbeiten mit der Tür um diese aus der geschlossenen Lage in die geöffnete Lage zu bringen, wenn die genannte Plattenkassette in Empfangsmittel eingeführt wird, wobei diese Türöffnungsmittel einen an dem genannten Gehäuse (22) schwenkbar angeordneten Arm (34, 36) aufweisen und wobei ein Betätiger (48, 50) mit dieser Tür (52) zusammenarbeitet, wenn die genannte Plattenkassette in die genannten Empfangsmittel eingeführt wird, wobei der Arm und der Betätiger die genannte Tür öffnen, wenn die genannte Plattenkassette in die genannten Empfangsmittel eingeführt wird, dadurch gekennzeichnet, daß
- die Kassette vom umkehrbaren Typ ist und
- die genannte Tür einen gegenüber der horizontalen zentralen Ebene der genannten Platte lateral verschobenen Empfänger (54) aufweist, der entweder in einer oberen oder unteren Lage gegenüber der genannten zentralen Ebene ausgerichtet ist, je nach der Lage der genannten Kassette,
- wobei die genannten Türöffnungsmittel einen ersten und einen zweiten in dem Gehäuse (22) schwenkbar angeordneten Arm (34 bzw. 36) aufweisen, wobei auf dem ersten Arm (34) ein erster Betätiger (48) vorgesehen ist zum Zusammenarbeiten mit dem genannten Empfänger wenn die genannte Plattenkassette sich in einer ersten Lage befindet, derart, daß der genannte Empfänger sich über der horizontalen Mitte der Plattenkassette befindet, und daß auf dem genannten zweiten Arm (36) ein zweiter Betätiger (50) vorgesehen ist zum Zusammenarbeiten mit dem genannten Empfänger, wenn die genannte Plattenkassette sich in einer zweiten der genannten ersten Lage entgegengesetzten Lage befindet, derart, daß der genannte Empfänger sich unter der horizontalen Mitte der Plattenkassette befindet, wobei beim Einführen einer Plattenkassette in die genannte Plattenantriebsvorrichtung der eine oder der andere der genannten Betätiger (48, 50) mit dem genannten Empfänger (54) zusammenarbeitet, so daß eine fortgesetzte Einführungsbewegung der Plattenkassette eine Schwenkbewegung desjenigen Armes verursacht, dessen Betätiger mit dem genannten Empfänger zusammenarbeitet, wodurch die Tür entgegen der Vorspannung der genannten Vorspannmittel aus der geschlossenen in die geöffnete Lage gebracht wird.

2. System nach Anspruch 1, dadurch gekennzeichnet, daß der Empfänger in der genannten Tür eine Ausnehmung aufweist, die sich über einen Teil des Abstandes der Dickenabmessung der Kassette erstreckt, wobei die Betätiger am ersten und zweiten Arm je über weniger als den genannten Abstand mit der genannten Tür zusammenarbeiten, so daß eine fortgesetzte Einführungsbewegung der Plattenkassette eine Schwenkbewegung der beiden Arme verursacht, wobei der Betätiger, der nicht mit dem Empfänger zusammenarbeitet entgegen der Vorspannung der Vorspannmittel über die Oberfläche der Tür schiebt.

3. Plattenkassette für ein System zum Aufzeichnen/Auslesen von Daten auf/von einem Plattenmedium mit einem Plattengehäuse, welches das Plattenmedium umschließt, und mit einer Tür (52) auf einem Kassettengehäuse, die zwischen einer offenen Lage, in der die beiden Oberflächen der genannten Platte zum Zusammenarbeiten mit einem Sensor (23) in einer Plattenantriebsvorrichtung erreichbar sind zum Ermöglichen einer Aufzeichnung und/oder einer Auslese auf dem Plattenmedium aufgezeichneter Daten, und einer geschlossenen Lage, in der die genannte Plattenoberfläche in dem genannten Kassettengehäuse eingeschlossen und nicht zugänglich ist, verschiebbar ist, und wobei Vorspannmittel auf dem genannten Kassettengehäuse die genannte Tür in der geschlossenen Lage vorspannen, wobei das genannte Kassettengehäuse in jeder der einander gegenüberliegenden Seiten eine Durchgangsöffnung aufweist, wobei die Kassette dadurch gekennzeichnet ist, daß sie vom umkehrbaren Typ ist und die genannte Tür einen Empfänger (54) aufweist, der seitlich aus der horizontalen Mittenebene der genannten Plattenkassette versetzt ist, so daß er entweder in der oberen oder unteren Lage gegenüber der genannten Mittenebene ausgerichtet werden kann, und zwar je nach der Lage der genannten Kassette.

4. Plattenantriebsvorrichtung für ein System zum Aufzeichnen/Auslesen von Daten auf/von einem Plattenmedium, wobei das System eine Plattenkassette aufweist mit einem Plattengehäuse, welches das Plattenmedium umschließt, und mit einer Tür (52) auf einem Kassettengehäuse, die zwischen einer offenen Lage, in der die beiden Oberflächen der genannten Platte zum Zusammenarbeiten mit einem Sensor (23) in einer Plattenantriebsvorrichtung erreichbar sind zum Ermöglichen einer Aufzeichnung und/oder einer Auslese auf dem Plattenmedium aufgezeichneter Daten, und einer geschlossenen Lage, in der die genannte Plattenoberfläche in dem genannten Kassettengehäuse eingeschlossen und nicht zugänglich ist, verschiebbar ist, und wobei Vorspannmittel auf dem genannten Kassettengehäuse die genannte Tür in der geschlossenen Lage vorspannen, wobei das genannte Kassettengehäuse in jeder der einander gegenüberliegenden Seiten eine Durchgangsöffnung aufweist, wobei Türöffnungsmittel (34, 36, 48, 50) in der Plattenantriebsvorrichtung vorgesehen sind zum Zusammenarbeiten mit der genannten Tür zum Bewegen derselben aus der geschlossenen Lage in die geöffnete Lage wenn die genannte Plattenkassette in die genannten Empfangsmittel geschoben wird, wobei diese Türöffnungsmittel einen an dem genannten Gehäuse (22) schwenkbar angeordneten Arm (34, 36) aufweisen, ebenso wie einen Betätiger (48, 50), der mit der genannten Tür (52) zusammenarbeitet, wenn die genannte Plattenkassette in die genannten Empfangsmittel geschoben wird, wobei der Arm und der Betätiger die genannte Tür öffnen wenn die genannte Plattenkassette in die Empfangsmittel geschoben wird, wobei die Kassette vom umkehrbaren Typ ist und die genannte Tür einen Empfänger (54) aufweist, der gegenüber der horizontalen Mittenebene der genannten Plattenkassette seitlich versetzt ist, wenn diese in der oberen oder unteren Lage gegenüber der zentralen Mittenebene ausgerichtet wird, je nach der Lage der genannten Kassette, wobei die genannten Türöffnungsmittel dadurch gekennzeichnet sind, daß sie einen ersten und einen zweiten am Gehäuse (22) schwenkbar angeordneten Arm (34 bzw. 36) aufweisen, wobei ein erster Betätiger (48) auf dem ersten Arm (34) angeordnet ist zum Zusammenarbeiten mit dem genannten Empfänger, wenn die genannte Plattenkassette sich in einer ersten Lage befindet, derart, daß der genannte Empfänger sich über der horizontalen Mitte der Plattenkassette befindet, und wobei ein zweiter Betätiger (50) auf dem genannten zweiten Arm (36) angeordnet ist zum Zusammenarbeiten mit dem genannten Empfänger, wenn die genannte Plattenkassette sich in einer der ersten Lage entgegengesetzten zweiten Lage befindet, derart, daß der genannte Empfänger sich unter der horizontalen Mitte der Plattenkassette befindet, wobei beim Einführen einer Plattenkassette in die genannte Plattenantriebsvorrichtung der eine oder der andere der genannten ersten und zweiten Betätiger (48, 50) mit dem genannten Empfänger (54) zusammenarbeitet, so daß eine fortgesetzte Einführung der Plattenkassette eine Schwenkbewegung desjenigen Armes verursacht, dessen Betätiger mit dem genannten Empfänger zusammenarbeitet, wodurch die Tür entgegen der Vorspannung der Vorspannmittel aus der geschlossenen in die geöffnete Lage geschoben wird.

5. Plattenantriebsvorrichtung nach Anspruch 4, wobei die genannten Arme in zwei verschiedenen parallelen Ebenen beweglich sind.

## Revendications

1. Système pour l'enregistrement et la lecture de données dans/d'un milieu en forme de disque comprenant une cartouche de disque munie d'un boîtier de disque enfermant le milieu en forme de disque et d'une porte (52) sur un boîtier de cartouche pouvant être déplacée entre une seule position ouverte dans laquelle les deux surfaces dudit disque sont exposées pour la coopération avec un capteur (23) dans un appareil d'entraînement de disque pour permettre l'enregistrement et/ou la lecture de données enregistrées dans ledit milieu en forme de disque et une position fermée dans laquelle ladite surface de disque est enfermée dans ledit boîtier de cartouche et non exposée, et des moyens de pression supportés par ledit boîtier de cartouche pressant ladite porte dans sa position fermée, dans lequel ledit boîtier de cartouche présente une ouverture d'accès ménagée dans chacune desdites faces opposées et permettant l'accès aux faces opposées dudit disque, des moyens d'ouverture de porte (34, 36, 48, 50) étant disposés dans l'appareil d'entraînement de disque pour s'engager avec ladite porte pour la déplacer à partir de sa position fermée dans sa position ouverte lorsque ladite cartouche de disque est introduite dans lesdits moyens de réception, les moyens d'ouverture de porte comprenant un bras (34, 36) monté de façon à pouvoir pivoter sur ledit châssis (22) et un actionneur (48, 50) s'engageant avec ladite porte (52) lorsque ladite cartouche de disque est introduite dans lesdits moyens de réception, lesdits bras et actionneur assurant l'ouverture de ladite porte lorsque ladite cartouche de disque est introduite dans lesdits moyens de réception, caractérisé en ce que
- la cartouche est du type physiquement inversible et
- ladite porte comprend un récepteur (54) latéralement décalé à partir du plan central horizontal de ladite cartouche de disque afin d'être orienté dans une position supérieure ou inférieure par rapport audit plan central, suivant l'orientation de ladite cartouche,
- lesdits moyens d'ouverture de porte comprenant des premier et deuxième bras (34, 36) montés de façon à pouvoir pivoter dans le châssis (22), un premier actionneur (48) monté sur ledit premier bras (34) pour s'engager avec ledit récepteur lorsque ladite cartouche de disque se trouve dans une première position de façon que ledit récepteur se situe au-dessus du centre horizontal de la cartouche de disque, et un deuxième actionneur (50) monté sur ledit deuxième bras (36) pour s'engager avec ledit récepteur lorsque ladite cartouche de disque se trouve dans une deuxième position opposée à ladite première position de façon que ledit récepteur se situe au-dessous du centre horizontal de la cartouche de disque, de sorte que lors de l'introduction d'une cartouche de disque dans ledit appareil d'entraînement de disque, l'un ou l'autre desdits premier et deuxième actionneurs (48, 50) s'engage avec ledit récepteur (54) de façon qu'un mouvement d'introduction continu de la cartouche de disque provoque un mouvement de pivotement du bras dont l'actionneur s'engage avec ledit récepteur, ce qui provoque le déplacement de la porte à partir de sa position fermée dans sa position ouverte à l'encontre de la pression exercée par lesdits moyens de pression.

2. Système selon la revendication 1, caractérisé en ce que le récepteur comporte un évidement dans ladite porte s'étendant sur une partie de la distance de la dimension d'épaisseur de la cartouche, les actionneurs sur les premier et deuxième bras s'engageant chacun avec ladite porte sur moins que ladite distance, de sorte qu'un mouvement d'introduction continu de la cartouche de disque provoque un mouvement de pivotement des deux bras, l'actionneur non engagé avec le récepteur coulissant sur la surface de la porte à l'encontre de la pression exercée par lesdits moyens de pression.

3. Cartouche de disque pour un système pour l'enregistrement et la lecture de données dans/d'un milieu en forme de disque munie d'un boîtier de disque enfermant un milieu en forme de disque et d'une porte (52) sur un boîtier de cartouche pouvant être déplacée entre une seule position ouverte dans laquelle les deux surfaces dudit disque sont exposées pour la coopération avec un capteur (23) dans un appareil d'entraînement de disque afin de permettre l'enregistrement et/ou la lecture de données enregistrées dans ledit milieu en forme de disque et une position fermée dans laquelle ladite surface de disque est enfermée dans ledit boîtier de cartouche et non exposée, et des moyens de pression supportés par ledit boîtier de cartouche pressant ladite porte dans sa position fermée, dans lequel ledit boîtier de cartouche présente une ouverture d'accès ménagée dans chacune desdites faces opposées et permettant l'accès aux faces opposées dudit disque, ladite cartouche étant caractérisée en ce qu'elle est du type physiquement inversible et ladite porte comprend un récepteur (54) latéralement décalé du plan central horizontal de ladite cartouche de disque afin d'être orienté dans une position supérieure ou inférieure par rapport audit plan central, suivant l'orientation de ladite cartouche.

4. Appareil d'entraînement de disque pour un système pour l'enregistrement et la lecture de données dans/d'un milieu en forme de disque, le système comprenant une cartouche de disque munie d'un boîtier de disque enfermant un milieu en forme de disque et d'une porte (52) sur un boîtier de cartouche pouvant être déplacée entre une seule position ouverte dans laquelle les deux surfaces dudit disque sont exposées pour la coopération avec un capteur (23) dans un appareil d'entraînement de disque afin de permettre l'enregistrement et/ou la lecture de données enregistrées dans ledit milieu en forme de disque et une position fermée dans laquelle ladite surface de disque est enfermée dans ledit boîtier de cartouche et non exposée, et des moyens de pression supportés par ledit boîtier de cartouche pressant ladite porte dans sa position fermée, dans lequel ledit boîtier de cartouche présente une ouverture d'accès ménagée dans chacune desdites faces opposées et permettant l'accès aux faces opposées dudit disque, des moyens d'ouverture de porte (34, 36, 48, 50) étant disposés dans l'appareil d'entraînement de disque afin de s'engager avec ladite porte pour la déplacer à partir de sa position fermée dans sa position ouverte lorsque ladite cartouche de disque est introduite dans lesdits moyens de réception, lesdits moyens d'ouverture de porte comprenant un bras (34, 36) monté de façon à pouvoir pivoter sur ledit châssis (22) et un actionneur (48, 50) s'engageant avec ladite porte (52) lorsque ladite cartouche de disque est introduite dans lesdits moyens de réception, lesdits bras et actionneur assurant l'ouverture de ladite porte lorsque la cartouche de disque est introduite dans lesdits moyens de réception, dans lequel la cartouche est du type physiquement inversible et ladite porte comprend un récepteur (54) latéralement décalé à partir du plan central horizontal de ladite cartouche de disque afin d'être orienté dans une position supérieure ou inférieure par rapport audit plan central, suivant l'orientation de ladite cartouche, lesdits moyens d'ouverture de porte étant caractérisés par des premier et deuxième bras (34, 36) montés de façon à pouvoir pivoter dans le châssis (22), un premier actionneur (48) monté sur ledit premier bras (34) pour s'engager avec ledit récepteur lorsque ladite cartouche de disque se trouve dans une première position de façon que ledit récepteur se situe au-dessus du centre horizontal de la cartouche de disque, et un deuxième actionneur (50) monté sur ledit deuxième bras (36) pour s'engager avec ledit récepteur lorsque ladite cartouche de disque se trouve dans une deuxième position opposée à ladite première position de façon que ledit récepteur se situe au-dessous du centre horizontal de la cartouche de disque, de sorte que lors de l'introduction d'une cartouche de disque dans ledit appareil d'entraînement de disque, l'un ou l'autre desdits premier et deuxième actionneurs (48, 50) s'engage avec ledit récepteur (54) de façon qu'un mouvement d'introduction continu de la cartouche de disque provoque un mouvement de pivotement du bras dont l'actionneur s'engage avec ledit récepteur, ce qui provoque le déplacement de la porte à partir de sa position fermée dans sa position ouverte à l'encontre de la pression exercée par lesdits moyens de pression.

5. Appareil d'entraînement de disque selon la revendication 4, lesdits bras pouvant être déplacés dans deux plans parallèles différents.
